(19) Europäisches Patentamt
European Patent Office
Office européen des brevets

(11) Publication number: 0 304 320 B1

(12) # EUROPEAN PATENT SPECIFICATION

(45) Date of publication of patent specification: **03.06.92** (51) Int. Cl.$^5$: **C09K 19/20**

(21) Application number: **88307708.3**

(22) Date of filing: **19.08.88**

(54) **Fluorine-containing liquid crystal compound.**

(30) Priority: **19.08.87 JP 204162/87**
**18.05.88 JP 119096/88**

(43) Date of publication of application:
**22.02.89 Bulletin 89/08**

(45) Publication of the grant of the patent:
**03.06.92 Bulletin 92/23**

(84) Designated Contracting States:
**DE FR GB**

(56) References cited:
**EP-A- 0 164 814**
**EP-A- 0 178 647**
**EP-A- 0 188 222**

(73) Proprietor: **Takasago International Corporation**
**19-22, Takanawa 3-chome Minato-ku**
**Tokyo(JP)**

(72) Inventor: **Okazaki, Tetsuharu**
**Takasago International Corporation Kamata Div.**
**36-31, Kamata 5-chome Ohta-ku Tokyo(JP)**
Inventor: **Kondo, Hitoshi**
**Takasago International Corporation Kamata Div.**
**36-31, Kamata 5-chome Ohta-ku Tokyo(JP)**
Inventor: **Yamaguchi, Akio**
**Takasago International Corporation Kamata Div.**
**36-31, Kamata 5-chome Ohta-ku Tokyo(JP)**

(74) Representative: **Diamond, Bryan Clive et al**
**Gee & Co., Chancery House, Chancery Lane**
**London WC2A 1OU(GB)**

EP 0 304 320 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a ferroelectric liquid crystal compound which exerts an electrooptical effect and is thus particularly useful in a large-sized display element required to have high-speed response.

Most liquid crystals conventionally used in practice are of a nematic type, in particular, a twist nematic (TN) type. These liquid crystals have been mainly employed in display devices of a small number of pixels such as those of clock, watch, and portable calculator. When these liquid crystals are applied to a display device of a relatively large area, for example, one having 100 or more signal electrodes, the contrast would be lowered and the visual field angle would be narrowed, which makes the display device unavailable in practice.

There are known two methods for solving the above problem. One method comprises enlarging the twisted angle (i.e., 90°) of TN liquid crystals to 180 to 270° to thereby enhance the contrast. Namely, this method is concerned with the development of supertwist nematic (STN) liquid crystals. Another method comprises introducing a transistor or a diode to each pixel to thereby inhibit the lowering in contrast. Namely, this method is concerned with the development of a novel driving system called an active matrix system.

These methods have made it possible to market liquid crystal TV sets having a frame size of 2 to 3 in. and a pixel number of 50,000 to 80,000. For such uses, it has been further required to develop a device of a larger display area, for example, a flat display available as a replacement of a CRT.

However, the dielectric effect of a nematic liquid crystal element, wherein merely the anisotropy of dielectric constant is utilized as a driving force by an electric field E, is so low that it is difficult to achieve high-speed response of an m•sec level or higher. Therefore, the display capacity, response and display qualities of such an element are essentially limited, in spite of continuous efforts to satisfy various detailed requirements depending on the purpose. On the other hand, ferroelectric liquid crystals have recently attracted public attention and expectation.

As a ferroelectric liquid crystal compound, R.B. Meyer et al. synthesized p-decyloxybenzyliden-p′-amino-2-methylbutyl cinnamate (DOBAMBC) for the first time in 1975 (cf. J. de Phys. Lett., 36, 69 (1975)). They found that this is a ferroelectric showing spontaneous polarization in a chiral smectic C phase.

In 1980, N.A. Clark et al. reported that DOBAMBC, which is a ferroelectric liquid crystal compound, shows high-speed switching characteristic at an order of m•sec or below in a thin film cell and that it has dipole stability (cf. Appl. Phys. Lett., 36, 899 (1980)). Thus, this compound has attracted public attention as an epochmaking material for display element materials. The ferroelectric liquid crystal compound is characterized by high-speed response and memory properties. In particular, the high-speed response of the same at a μ•sec order is never observed in other liquid crystals. By taking the molecular structure of this ferroelectric liquid crystal compound into consideration, the ferroelectricity thereof would be never observed unless the following three requirements are satisfied and thus spontaneous polarization occurs. (1) It comprises a dipole moment or a dipole moment component vertical to the major axis of the molecule. (2) The molecule is a chiral molecule having an optically active group. (3) It is in a smectic phase having a tilting angle. The driving force of an element in an electric field E is represented by the spontaneous polarization Ps(nC/cm$^2$) while the response rate is determined as follows.

$$\tau = \eta / Ps \cdot E$$

wherein $\eta$ represents a viscosity to a precession at a constant tilt angle (cf. M.A. Handschy, Appl. Phys. Lett., 41, 39 (1982)) Thus, it is required to enhance the spontaneous polarization in order to achieve high-speed response.

There are a number of problems to be solved in the practical application of the electrooptical effects of ferroelectric liquid crystals to various elements and devices, for example, orientation techniques, construction of cells, mass production of cells and driving systems. Among these problems, it is the most important to develop a high-speed response liquid crystal which shows enhanced spontaneous polarization over a wide range of temperature.

It is an object of the present invention to satisfy this requirement.

The permanent dipole moment vertical to the major axis of a molecule contributes to the spontaneous polarization. However, the spontaneous polarization of liquid crystals is extremely small, as compared with the case of a solid, and corresponds to approximately 1/300 D of the expected value, when the $\rangle$ C=O bond moment is completely orientated. It is believed that a significant decrease in spontaneous polarization might be caused by the fact that the rotation of the molecule is not restricted, as in the case of a solid, but is considerably free and that substantial orientation of the dipole is compensated with intramolecular

movements such as rotation or vibration, since the permanent dipole and the asymmetric carbon atom are far apart from each other.

Therefore, the spontaneous polarization may be enhanced by locating the asymmetric carbon atom and the permanent dipole as near as possible or by directly introducing a halogen atom or a bond having a large polarization into the asymmetric carbon atom.

Under these circumstances, the present inventors have conducted extended studies on the molecular structures including optically active groups of liquid crystal compounds showing practically effective spontaneous polarization. As a result, it has been found that a compound of the following formula (I) shows relatively large spontaneous polarization over a wide range, thus providing the present invention.

Accordingly, the present invention provides a liquid crystal compound of formula (I):

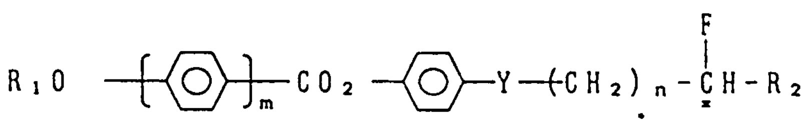 (I)

wherein $R_1$ represents an alkyl group having from 6 to 12 carbon atoms; $R_2$ represents an alkyl group having from 1 to 6 carbon atoms; Y represents -O-,

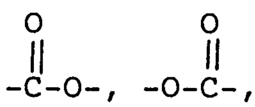

or a single bond; m is 1 or 2; n is 2 or 3 when Y is -O- or

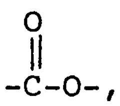

or n is an integer of from 1 to 3 when Y is

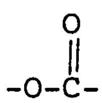

or a single bond; and * means asymmetric carbon, which has ferroelectricity and shows excellent high-speed response.

Now, general methods for synthesizing the compounds of formula (I) are briefly described.

A. Compound (I) Including Ether Bond

A compound of formula (I) wherein Y represents an ether bond, -O-, can be obtained in the following manner. A hydroxyl group of an optically active hydroxyfatty acid ester (II) is fluorinated with a fluorinating agent. Then the obtained product is reduced with a reducing agent to give an alcohol which is subsequently treated with p-toluenesulfonic acid to give a tosylate (IV). Then the tosylate is reacted with hydroquinone benzyl ether to give an ether (V). The obtained ether is hydrogenated under atmospheric pressure to give a hydroquinone derivative (VI). The obtained product (VI) is condensed with an alkoxybiphenylcarboxylic acid to give the desired product (I).

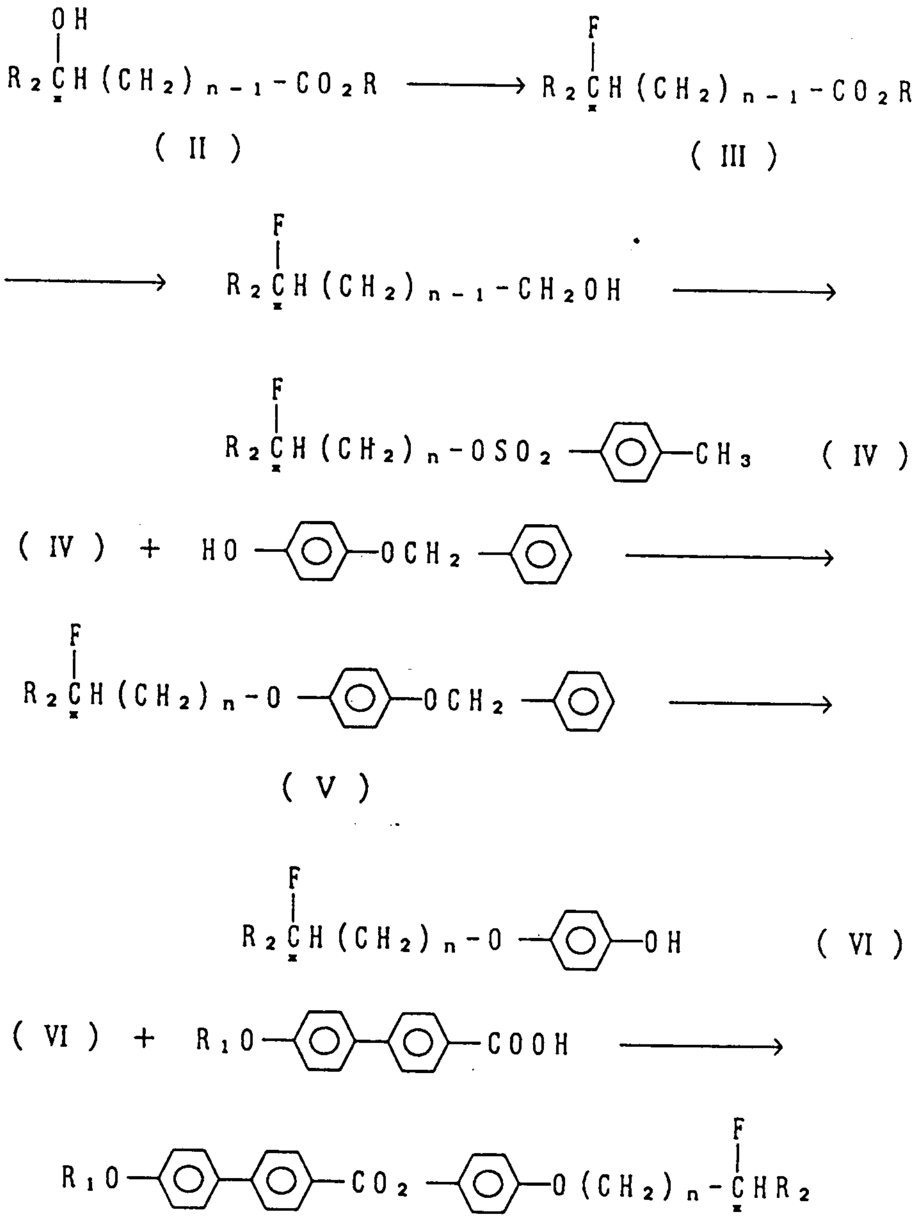

( II ) ( III )

( IV )

( V )

( VI )

B. Compound (I) Including Ester Bond

A compound of formula (I) wherein Y represents an ester bond,

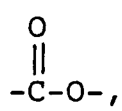

can be obtained in the following manner. An optically active fluoroalkanol is reacted with p-acetoxybenzoyl chloride to give an ester. This ester is deacetylated with benzylamine and then reacted with a 4-substituted benzoic acid to give the desired ester.

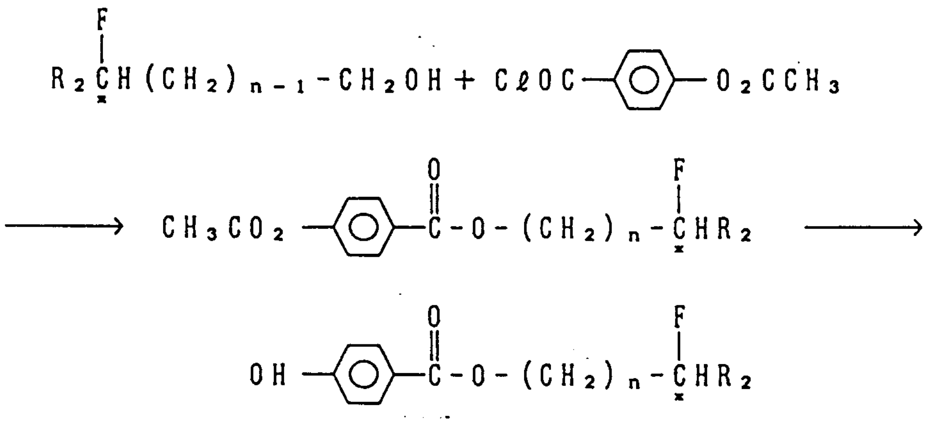

( V )

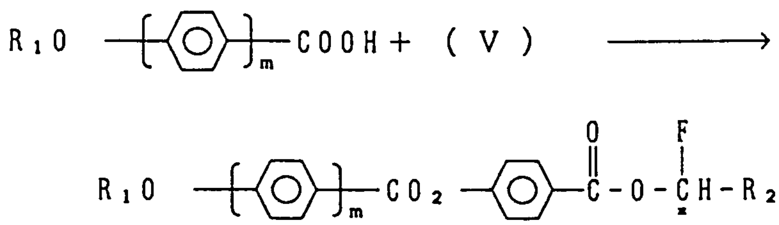

A compound of formula (I) wherein Y represents an ester bond,

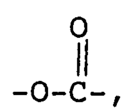

can be obtained in the following manner. An optically active fluoroalkanoyl chloride is reacted with p-benzyloxyphenol to give an ester. The obtained ester is hydrogenated under atmospheric pressure to give hydroquinone monoester (VI) which is then reacted with a 4-substituted benzoic acid to give the desired ester.

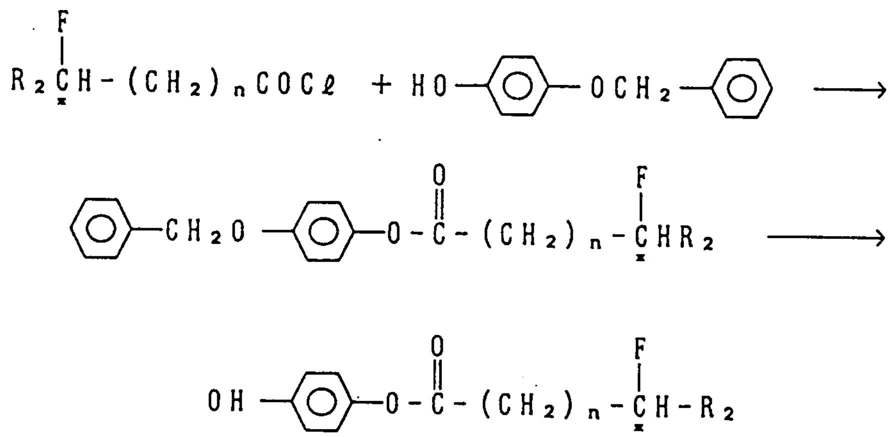

( VI )

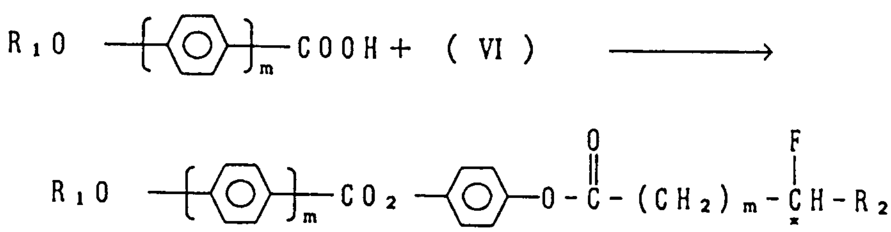


C. Compound (I) Including Single Bond

A compound of formula (I) wherein Y is a single bond can be obtained in the following manner. First, an optically active 4-benzyloxyphenylhydroxyalkane (VII) is fluorinated with a fluorinating agent and then hydrogenated under atmospheric pressure to give a hydroxyphenylfluoroalkane (IX). Then the alkane (IX) is condensed with an alkoxybiphenylcarboxylic acid to give the desired product.

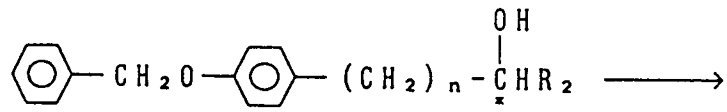

( VII )

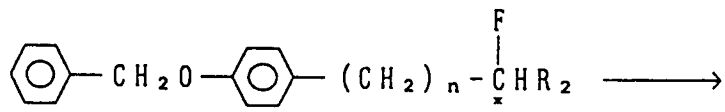

( VIII )

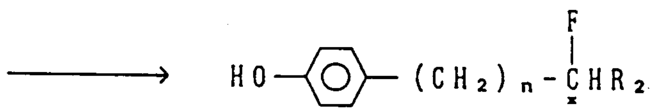 ( IX )

( IX ) + 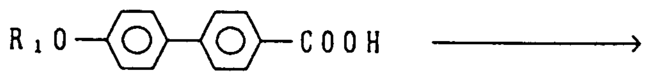

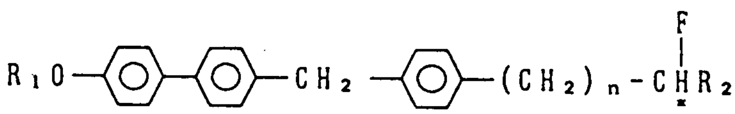

Typical examples of the liquid crystal compound of the present invention represented by formula (I) are as follows:

1.

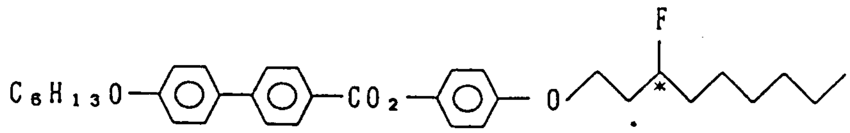

2.

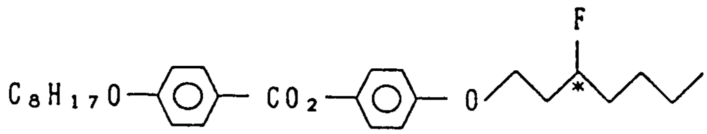

3.

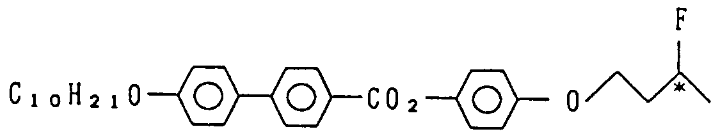

4.

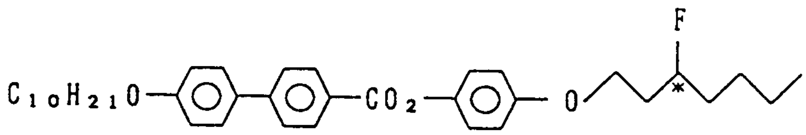

5.

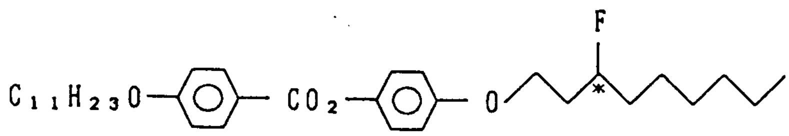

6.

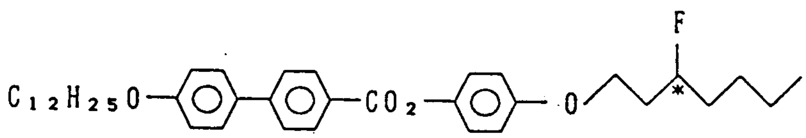

7.

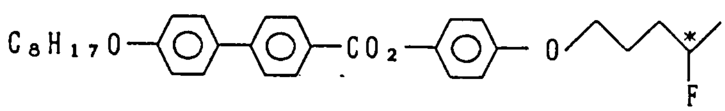

8.

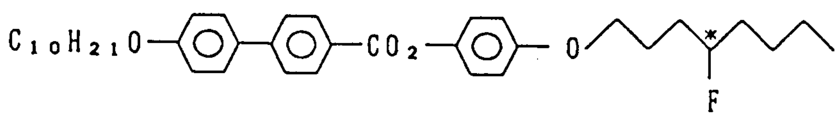

9.

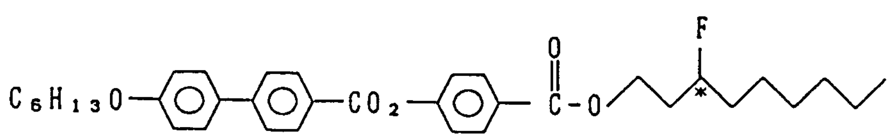

10.

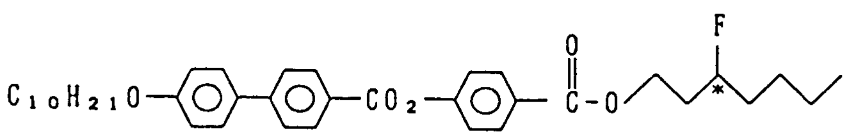

11. 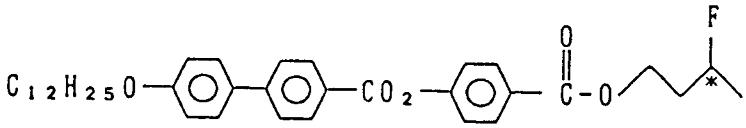

12. 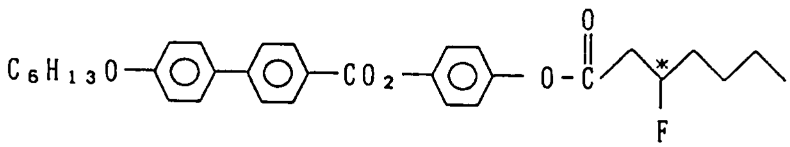

13. 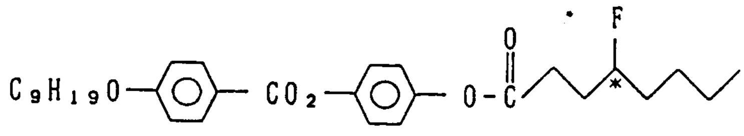

14. 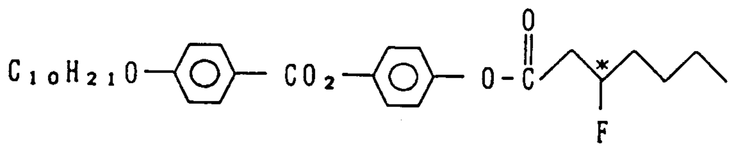

15. 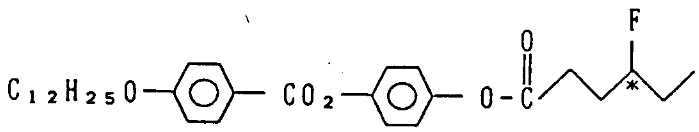

16. 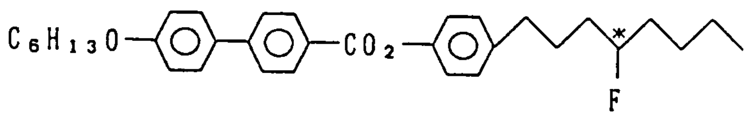

17. 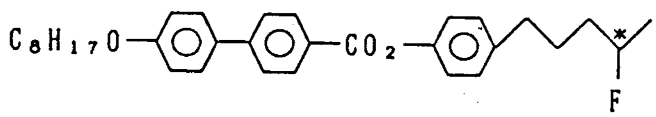

18. 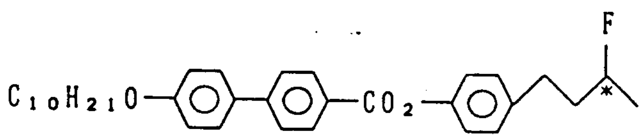

19. 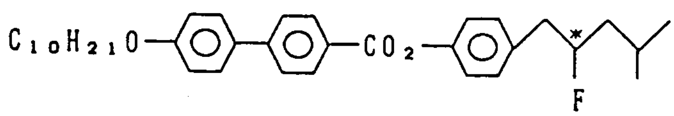

20. 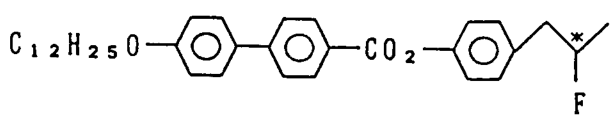

21. 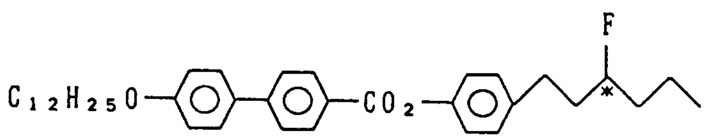

The liquid crystal compound of the present invention can be combined with an existing ferroelectric liquid crystal compound or an Sc phase compound showing no ferroelectricity, to thereby enlarge the temperature range of the Sc* phase. Thus, a liquid crystal composition practically available in, for example, a display element can be obtained. Further, the compound of the present invention showing little liquid crystal properties can be combined with a compound showing an Sc or Sc* phase in an amount of from approximately 5 to 20%, to thereby give a ferroelectric liquid crystal composition showing large spontaneous polarization.

To further illustrate the present invention, the following examples are given.

EXAMPLE 1

Synthesis of (R)-4-(4″-decyloxybiophenyl-4′-carbonyloxy)-phenyl-3-fluorobutyl ether (Compound No. 3):

12.0 g of methyl (R)-3-hydroxybutyrate and 43.0 g of hexafluoropropendiethylamine were added to 150 ml of dichloroethane and the mixture was allowed to react at room temperature under stirring for 20 hours. Then, 120 ml of water was added thereto and the resulting mixture was subjected to liquid separation. The organic phase was dried and distilled under reduced pressure and a fraction of 75 to 80°C/122 mmHg was collected. The methyl 3-fluorobutyrate thus obtained was reduced with lithium aluminum hydride in a conventional manner to give 5.23 g of (R)-3-fluorobutanol. 5.0 g of this 3-fluorobutanol was dissolved in 50 ml of pyridine and 8.84 g of p-toluenesulfonyl chloride was added thereto. The obtained mixture was stirred at room temperature for 2 hours. After completion of the reaction, the reaction mixture was added to 50 ml of ice/water and extracted with n-hexane. The extract was concentrated by drying and purified through a silica gel column with the use of chloroform as an eluent. Thus, 10.09 g of a tosylate was obtained.

4.4 g of hydroquinone monobenzyl ether, 0.5 ml of water, 25 ml of ethanol and 1.45 g of 85% potassium hydroxide were mixed and refluxed. 4 0 g of the above-described tosylate was added thereto and the mixture was refluxed for an additional 2 hours. After cooling, 50 ml of water was added thereto and the mixture was extracted with diethyl ether. The extract was concentrated by drying and purified through a silica gel column with the use of chloroform as an eluent. Thus, 4.09 g of (R)-p-benzyloxyphenyl-3-fluorobutyl ether was obtained. This ether was hydrogenated with 10% palladium-carbon under atmospheric pressure to give 2.64 g of (R)-hydroquinone mono(3-fluorobutyl) ether.

1.0 g of this (R)-hydroquinone mono(3-fluorobutyl) ether and 1.0 g of 4′-decyloxybiphenyl-4-carboxylic acid were condensed with N,N′-dicyclohexylcarbodiimide and the obtained product was subjected to silica gel column chromatography (eluent: chloroform) and recrystallized from ethanol to give 2.37 g of (R)-4-(4″-decyloxybiphenyl-4′-carbonyloxy<)phenyl-3-fluorobutyl ether was obtained (theoretical yield: 83.7%).

The analytical data of this compound were as follows.

Specific Rotation $[\alpha]_D^{25}$ = -11.55°

Ms: 520 ($M^+$)

NMR: 0.89 (3H, t, J = 6.9 Hz), 1.28-1.40 (14H, m), 1.49 (3H, m), 1.81 (2H, m), 2.10 (2H, m), 4.01 (2H, t), 4.13 (2H, m), 4.95 (1H, m), 6.96 (2H, m), 7.02 (2H, m), 7.15 (2H, m), 7.60 (2H, m), 7.69 (2H, m) and 8.24 (2H, m).

EXAMPLE 2

Synthesis of (R)-4-(4″-octyloxyphenyl-4′-carbonyloxy)-phenyl-3-fluoroheptyl ether (Compound No. 2):

The procedure of Example 1 was repeated except that the methyl (R)-3-hydroxybutyrate was replaced by 18 g of methyl (R)-3-hydroxyheptanoate and the 4′-decyloxybiphenyl-4-carboxylic acid was replaced with 1.36 g of 4-octyloxybenzoic acid. Thus, 2.03 g of (R)-4-(4″-octyloxyphenyl-4′-carbonyloxy)phenyl-3-fluoroheptyl ether was obtained (theoretical yield: 81.5%).

The analytical data of this compound were as follows.

Specific Rotation $[\alpha]_D^{25}$ = +12.4°

Ms: 520 ($M^+$)

NMR : 0.94 (6H, t, J = 7.0 Hz), 1.50 (14H, m), 1.83 (2H, m), 2.06 (2H, m), 4.05 (2H, m), 4.14 (2H, m), 4.75 (1H, m), 6.95 (4H, m), 7.12 (2H, m) and 8.14 (2H, m).

EXAMPLE 3

Synthesis of (R)-4-(4″-decyloxybiphenyl-4′-carbonyloxy)-benzoic acid-3-fluoroheptyl ester (Compound No. 10):

13.4 g of (R)-3-fluoroheptanol and 10 g of pyridine were dissolved in 60 ml of toluene. To the obtained solution, a mixture of 19.7 g of p-acetoxybenzoic chloride and 20 ml of toluene was added dropwise and the resulting mixture was stirred at room temperature for 20 hours. After adding 60 ml of water, the reaction mixture was subjected to liquid separation and the organic phase was concentrated by drying. Subsequently the dried matter was recrystallized from methanol to give 25.1 g of (R)-p-acetoxybenzoic acid-3-fluoroheptyl ester.

25.1 g of the (R)-p-acetoxybenzoic acid-3-fluoroheptyl ester thus obtained and 9.1 g of benzylamine were dissolved in 120 ml of methanol and the mixture was allowed to react under boiling for 2 hours. After recovering the methanol, the residue was poured into water and extracted with toluene. The organic phase was washed with water, concentrated by drying and purified through a silica gel column with the use of chloroform as an eluent. Thus, 16.8 g of (R)-p-hydroxybenzoic acid-3-fluoroheptyl ester was obtained.

2.54 g of the (R)-p-hydroxybenzoic acid-3-fluoroheptyl ester thus obtained and 3.54 g of 4′-decyloxybiphenyl-4-carboxylic acid were condensed with N,N′-dicyclohexylcarbodiimide. The obtained product was subjected to silica gel column chromatography (eluent: chloroform) and recrystallized from ethanol to give 4.66 g of (R)-4-(4″-decyloxybiphenyl-4′-carbonyloxy)-benzoic acid-3-fluoroheptyl ester (theoretical yield: 79.0%).

The analytical data of this compound were as follows.

Specific Rotation $[\alpha]_D^{25}$ = +12.0°

Ms: 590 ($M^+$)

NMR: 0.97 (6H, t, J = 7.1 Hz), 1.54 (28H, m), 2.05 (2H, m), 4.01 (2H, m), 4.48 (2H, m), 4.72 (1H, m), 7.02 (2H, d, J = 8.8), 7.35 (2H, m), 7.60 (2H, d, J = 8.7), 7.71 (2H, d, J = 8.5), 8.13 (2H, m) and 8.24 (2H, d, J = 8.4).

## EXAMPLE 4

Synthesis of (R)-4-(4″-decyloxyphenyl-4′-carbonyloxy)-phenol-3-fluoroheptanoate (Compound No. 14):

6.0 g of 4-benzyloxyphenol and 3.55 g of pyridine were dissolved in 40 ml of toluene and 10 ml of a mixture of (R)-3-fluoroheptanoic chloride and toluene was added dropwise thereto. The resulting mixture was stirred at room temperature for 20 hours. After adding 50 ml of water, the reaction mixture was subjected to liquid separation and the organic phase was concentrated by drying. Then, the dried matter was recrystallized from methanol to give 7.3 g of (R)-p-benzyloxyphenol-3-fluoroheptanoate. 7.3 g of this (R)-p-benzyloxyphenol-3-fluoroheptanoate was dissolved in 40 ml of methanol and 0.36 g of 10% palladium-carbon was added thereto. Thus, the ester was hydrogenated under atmospheric pressure to give 3.76 g of hydroquinone mono-3-fluoroheptanoate.

1.0 g of this hydroquinone mono-3-fluoroheptanoate and 1.15 g of 4-decyloxybenzoic acid were condensed with N,N′-dicyclohexylcarbodiimide and the obtained product was subjected to silica gel column chromatography (eluent: chloroform) and recrystallized from ethanol. Thus, 1.56 g of (R)-4-(4″-decyloxyphenyl-4′-carbonyloxy)phenol-3-fluoroheptanoate was obtained (theoretical yield: 75.5%).

The analytical data of this compound were as follows.

Specific Rotation $[\alpha]_D^{25}$ = -0.6°

Ms: 500 ($M^+$)

NMR : 0.88 (3H, d, J = 7.1 Hz), 1.0 (3H, d, J = 7.1), 1.42 (18H, m), 1.82 (2H, m), 2.53 (2H, m), 4.02 (2H, m), 6.05 (1H, m), 6.96 (2H, m), 7.10 (2H, m), 7.21 (2H, m), 7.32 (2H, m) and 8.13 (2H, m).

## EXAMPLE 5

Synthesis of (R)-2-fluoropropylphenyl-4′-dodecyloxybiphenyl-4-carboxylate (Compound No. 20):

2.4 g of 1-(4′ benzyloxyphenyl)-2-hydroxypropane obtained by asymmetric hydrogenation was dissolved in 20 ml of methylene chloride. The solution was maintained at 5 to 10°C and a mixture of 4.4 g of hexafluoropropene and 10 ml of methylene chloride was added dropwise thereto. The resulting mixture was allowed to react at room temperature for 6 hours.

Then, the reaction mixture was poured into water, stirred and then allowed to stand. Then, it was subjected to liquid separation and the organic phase was washed with water and concentrated by drying to give a crude product. This crude product was subjected to silica gel column chromatography (eluent: benzene) to give 1.8 g of 1-(4′-benzyloxyphenyl)-2-fluoropropane (theoretical yield: 75%). This product was dissolved in 30 ml of methanol and then hydrogenated by adding 0.2 g of 5% palladium-carbon thereto under atmospheric pressure. Then, the catalyst was filtered off and the -filtrate was concentrated to give 1.3 g of 1-(4′-hydroxyphenyl)-2-fluoropropane (theoretical yield: 83%).

Subsequently, 3.3 g of 4′-dodecyloxybiphenyl-4-carboxylic acid and 1.5 g of 1-(4, hydroxyphenyl)-2-fluoropropane were dissolved in 80 ml of methylene chloride. The obtained mixture was maintained at 5 to 10°C and reacted with, as a condensing agent, N,N′-dicyclohexylcarbodiimide for 2 hours. After completion

of the reaction, the mixture was filtered and the filtrate was concentrated. The crude product thus obtained was subjected to silica gel column chromatography (eluent: chloroform) and recrystallized from ethanol twice. Thus, 3.3 g of the aimed (R)-2-fluoropropylphenyl-4′-dodecyloxybiphenyl-4-carboxylate was obtained (theoretical yield: 63.7%).

The analytical data of this compound were as follows.

Specific Rotation $[\alpha]_D^{25}$ = +6.0°

MS: 518 ($M^+$)

NMR: 0.89 (3H, t, J = 7.3 Hz), 1.32 (21H, m), 1.83 (2H, m), 2.94 (2H, m), 4.04 (2H, m), 4.90 (1H, m), 7.02 (2H, m), 7.18 (2H, m), 7.18 (2H, m), 7.60 (2H, m), 7.70 (2H, m) and 8.24 (2H, m).

## EXAMPLE 6

### Synthesis of (R)-4-(4″-decyloxybiophenyl-4′-carbonyloxy)-phenyl-3-fluoroheptyl ether (Compound No. 4):

The procedure of Example 1 was repeated except that the methyl (R)-3-hydroxybutyrate was replaced with 18 g of methyl (R)-3-hydroxyheptanoate to give 1.95 g of (R) 4-(4″-decyloxybiphenyl-4′-carbonyloxy)-phenyl-3-fluoroheptyl ether (theoretical yield: 80.5%).

The analytical data of this compound were as follows.

Specific Rotation $[\alpha]_D^{25}$ = -12.0°

Ms: 590 ($M^+$)

NMR: 0.92 (6H, t, J = 7.2 Hz), 1.55 (22H, m), 2.06 (2H, m), 4.02 (2H, m), 4.48 (2H, m), 4.72 (1H, m), 7.03 (2H, m), 7.35 (2H, m), 7.60 (2H, m), 7.71 (2H, m), 8.13 (2H, m) and 8.23 (2H, m).

## EXAMPLE 7

Liquid crystal properties of the (R)-4-(4″-decyloxybiphenyl-4′-carbonyloxy)phenyl-3-fluorobutyl ether (Compound No. 3) prepared in Example 1 were examined in the following manner. A transparent electrode located on a glass plate was coated with a polyimide resin and rubbed into a definite direction. Two base plates were arranged in such a manner to make the rubbing directions parallel to each other and a spacer was inserted therebetween to give a liquid crystal cell of 3 µm in thickness.

The compound of the present invention was poured into the cell. A square-wave alternating current (±20 V) was applied thereto with the use of a helium/neon laser and a photomultiplier tube and the electrooptical effect of the liquid crystal was observed. As a result, definite contrast and high-speed response were observed, which suggested that this material was available as a liquid crystal display element.

On the other hand, the phase transition temperature of this compound was determined by using a differential scanning calorimeter and a polarizing microscope. Table 1 shows the phase transition temperature of the compound of the present invention, wherein $S_1$ represents an unidentified liquid crystal phase, while Table 2 shows various characteristics thereof.

## EXAMPLES 8 TO 12

The phase transition temperatures and various characteristics of Compound Nos. 2, 10, 14, 11 and 4 according to the present invention were determined in the same manner as in Example 7. Tables 1 and 2 show the results.

## EXAMPLES 13 TO 16

In order to obtain a liquid crystal composition for a display device showing high-speed response over a wide temperature range, the liquid crystal compound of the present invention was mixed with other liquid crystal compounds and the response capability of the resulting mixture as a display element was evaluated. The determination was carried out in the same manner as in Example 7. Tables 1 and 2 show the results.

In Example 13, the liquid crystal composition comprised the following compounds. Namely, it was a mixture of Compound No. 4 of the present invention together with those disclosed by JP-A-63-33351 (the term "JP-A" as used herein refers to a "published unexamined Japanese patent application"). This mixture will be called Mixture No. 1 hereinafter.

mol%

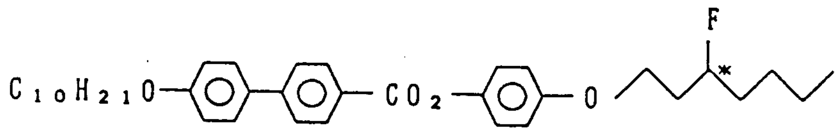

25.7

(Compound No. 4)

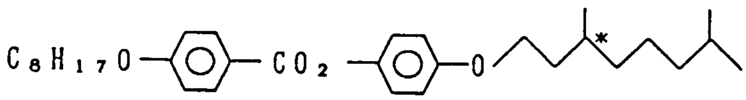

33.5

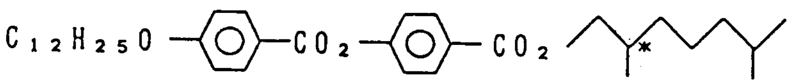

21.1

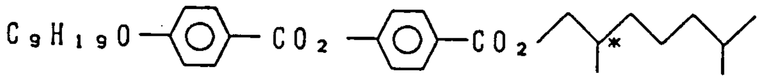

19.7

In Example 14, the liquid crystal composition, which will be called Mixture No. 2 hereinafter, comprised the following compounds.

mol%

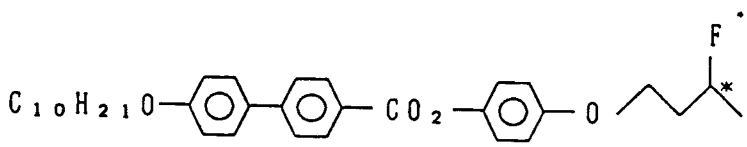

5.4

(Compound No. 3)

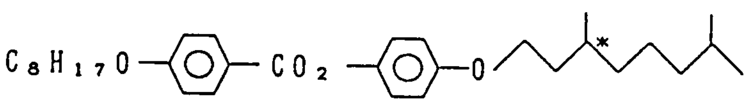

33.3

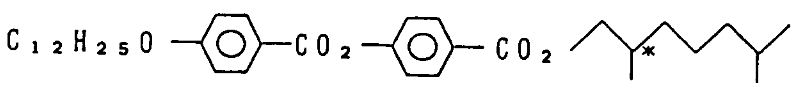

21.0

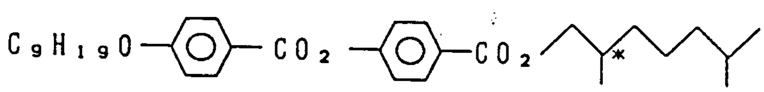

19.6

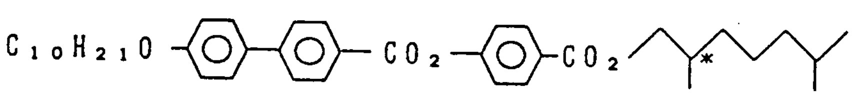

20.7

In Example 15, the liquid crystal composition, which will be called Mixture No. 3 hereinafter, comprised the following compounds.

mol%

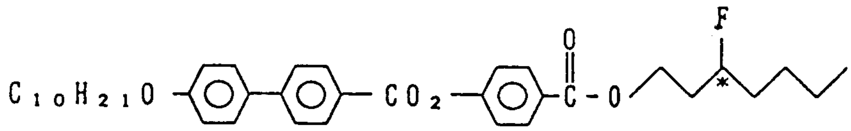 4.7

(Compound No. 10)

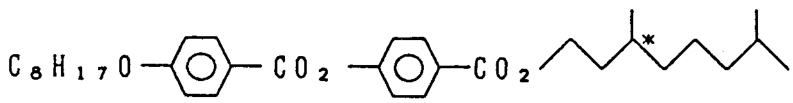 25.4

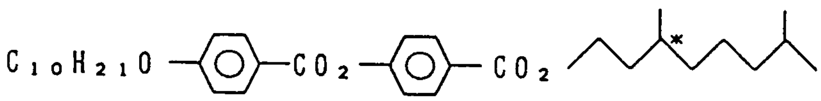 27.0

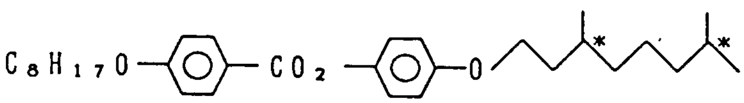 24.5

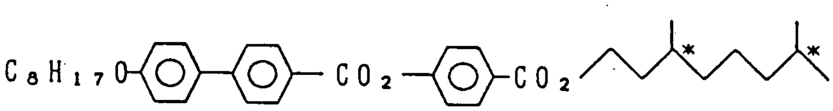 18.3

In Example 16, the liquid crystal composition, which will be called Mixture No. 4 hereinafter, comprised the following compounds.

mol%

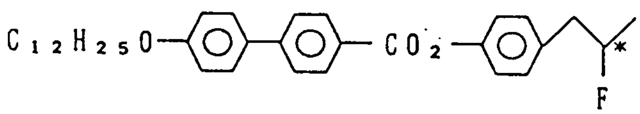 25.2

(Compound No. 20)

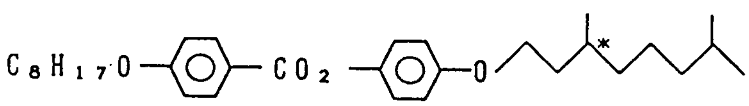 33.8

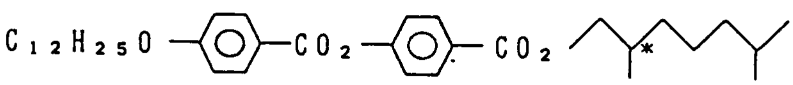 21.2

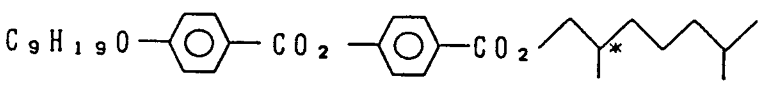 19.8

## TABLE 1

### Phase Transition Temperature

| Example No. | Compound | Phase Transition Temperature |
|---|---|---|
| 7 | Compound No. 3 | I $\xleftarrow{203.0}$ Ch $\xleftarrow{202.8}$ $S_A$ $\xleftarrow{127.8}$ $S_C^*$ $\xleftarrow{121.6}$ Cr; $\searrow$ 119.5 $S_1$ |
| 8 | Compound No. 2 | I $\xleftarrow{81.8}$ Ch $\xleftarrow{57.6}$ $S_C^*$ $\xleftarrow{48.6}$ Cr |
| 9 | Compound No. 10 | I $\xleftarrow{179.5}$ $S_A$ $\xleftarrow{151.3}$ $S_C^*$ $\xleftarrow{108}$ Cr |
| 10 | Compound No. 14 | I $\xleftarrow{92.2}$ Ch $\xleftarrow{80.3}$ $S_C^*$ $\xleftarrow{69.5}$ Cr; $\searrow$ 68.6 $S_1$ |
| 11 | Compound No. 11 | I $\xleftarrow{187}$ $S_A$ $\xleftarrow{131.6}$ $S_C^*$ $\xleftarrow{114.1}$ Cr |
| 12 | Compound No. 4 | I $\xleftarrow{188.7}$ Ch $\xleftarrow{188.5}$ $S_A$ $\xleftarrow{172}$ $S_C^*$ $\xleftarrow{107}$ Cr; $\searrow$ 108 $S_1$ |
| 13 | Mixture No. 1 | I $\xleftarrow{93.8}$ $S_A$ $\xleftarrow{54.5}$ $S_C^*$ $\xleftarrow{4}$ Cr |
| 14 | Mixture No. 2 | I $\xleftarrow{99.8}$ $S_A$ $\xleftarrow{60}$ $S_C^*$ $\xleftarrow{0 >}$ Cr |
| 15 | Mixture No. 3 | I $\xleftarrow{118}$ $S_A$ $\xleftarrow{67.4}$ $S_C^*$ $\xleftarrow{17}$ Cr |
| 16 | Mixture No. 4 | I $\xleftarrow{88.4}$ $S_A$ $\xleftarrow{52.1}$ $S_C^*$ $\xleftarrow{5}$ Cr |

TABLE 2

| | Characteristics | | | |
|---|---|---|---|---|
| Example No. | Temperature (°C) | Spontaneous Polarization ($nC/cm^2$) | Tilt Angle (°) | Response Rate ($\mu$•sec) |
| 7 | 122.8 | 3.7 | 16 | 31 |
| 8 | 47 | 6.6 | 29 | 51 |
| 9 | 141 | 6.9 | 34.5 | 24 |
| 10 | 51 | 2.1 | 33 | 53 |
| 11 | 121 | 4.3 | 35 | 17.9 |
| 12 | 110 | 60 | 29 | 23 |
| 13 | 28 | 4.6 | 13 | 165 |
| 14 | 28 | 15.5 | 18 | 131 |
| 15 | 24 | 7.3 | 20.5 | 189 |
| 16 | 28 | 5.9 | 10 | 193 |

The liquid crystal compound of the present invention, which shows high-speed response in displaying an image and exhibits ferroelectricity over a wide temperature range, can satisfy future requirements for high density and large-sized display devices.

**Claims**

**1.** A liquid crystal compound of formula (I):

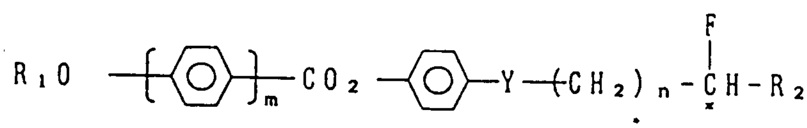

(I)

wherein $R_1$ represents an alkyl group having from 6 to 12 carbon atoms; $R_2$ represents an alkyl group having from 1 to 6 carbon atoms; Y represents -O-,

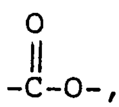, 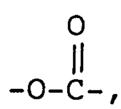,

or a single bond; m is 1 or 2; n is 2 or 3 when Y is -O- or

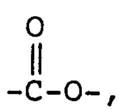,

or n is an integer of from 1 to 3 when Y is

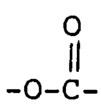

or a single bond; and * denotes an asymmetric carbon atom.

**2.** A liquid crystal compound as claimed in claim 1, wherein said compound is represented by formula:

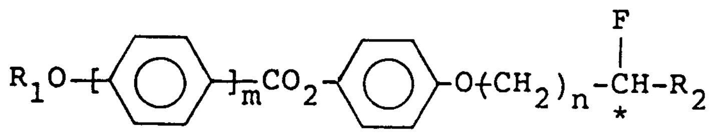

wherein $R_1$ represents an alkyl group having from 6 to 12 carbon atoms; $R_2$ represents an alkyl group having from 1 to 6 carbon atoms; m is 1 or 2; n is 2 or 3; and * means asymmetric carbon.

**3.** A liquid crystal compound as claimed in claim 1, wherein said compound is represented by formula:

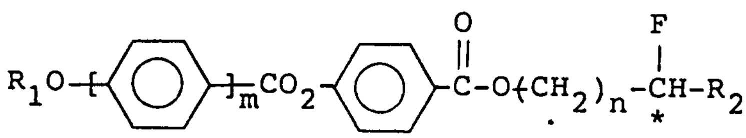

wherein $R_1$ represents an alkyl group having from 6 to 12 carbon atoms; $R_2$ represents an alkyl group having from 1 to 6 carbon atoms; m is 1 or 2; n is 2 or 3; and * means asymmetric carbon.

**4.** A liquid crystal compound as claimed in claim 1, wherein said compound is represented by formula:

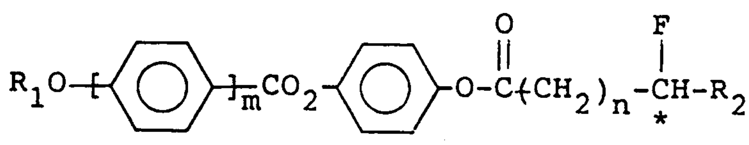

wherein $R_1$ represents an alkyl group having from 6 to 12 carbon atoms; $R_2$ represents an alkyl group having from 1 to 6 carbon atoms; m is 1 or 2; n is an integer of from 1 to 3; and * means asymmetric carbon.

**5.** A liquid crystal compound as claimed in claim 1, wherein said compound is represented by formula:

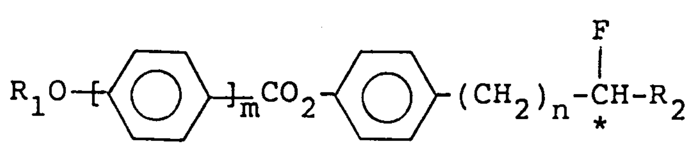

wherein $R_1$ represents an alkyl group having from 6 to 12 carbon atoms; $R_2$ represents an alkyl group having from 1 to 6 carbon atoms; m is 1 or 2; n is an integer of from 1 to 3; and * means asymmetric carbon.

**6.** A liquid crystal composition comprising a liquid crystal compound represented by formula:

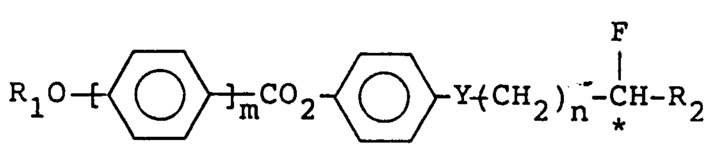 (I)

wherein $R_1$ represents an alkyl group having from 6 to 12 carbon atoms; $R_2$ represents an alkyl group having from 1 to 6 carbon atoms; Y represents -O-,

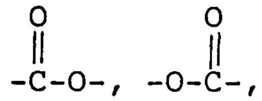

or a single bond; m is 1 or 2; n is 2 or 3 when Y is -O- or

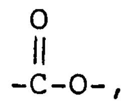

or n is an integer of from 1 to 3 when Y is

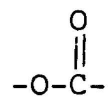

or a single bond; and * means asymmetric carbon, and a different kind of a liquid crystal compound exhibiting an Sc phase.

**Revendications**

1. Composition de cristal liquide de formule (I) :

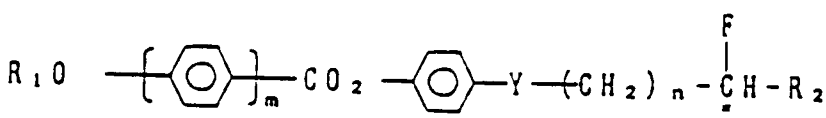 (I)

dans laquelle $R_1$ représente un groupe alkyle ayant de 6 à 12 atomes de carbone; $R_2$ représente un groupe alkyle ayant de 1 à 6 atomes de carbone; Y représente -O-,

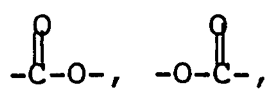

ou une liaison unique; m vaut 1 ou 2; n vaut 2 ou 3 quand Y est -O- ou

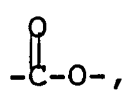

ou n est un nombre entier de 1 à 3 quand Y est

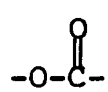

ou une liaison unique; et * désigne un atome de carbone asymétrique.

2. Composition de cristal liquide telle que revendiquée dans la revendication 1, dans laquelle ledit composé est représenté par la formule :

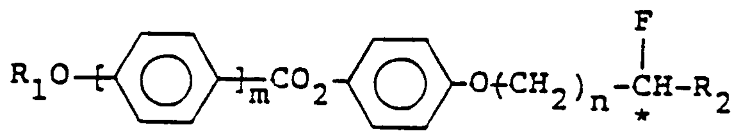

dans laquelle $R_1$ représente un groupe alkyle ayant de 6 à 12 atomes de carbone; $R_2$ représente un groupe alkyle ayant de 1 à 6 atomes de carbone; m vaut 1 ou 2; n vaut 2 ou 3; et * désigne un carbone asymétrique.

**3.** Composition de cristal liquide telle que revendiquée dans la revendication 1, dans laquelle ledit composé est représenté par la formule :

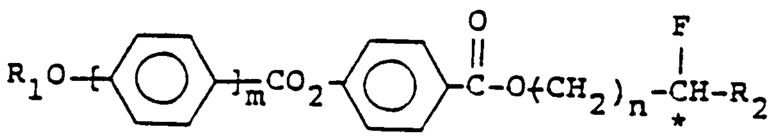

dans laquelle $R_1$ représente un groupe alkyle ayant de 6 à 12 atomes de carbone; $R_2$ représente un groupe alkyle ayant de 1 à 6 atomes de carbone; m vaut 1 ou 2; n vaut 2 ou 3; et * désigne un carbone asymétrique.

**4.** Composition de cristal liquide telle que revendiquée dans la revendication 1, dans laquelle ledit composé est représenté par la formule :

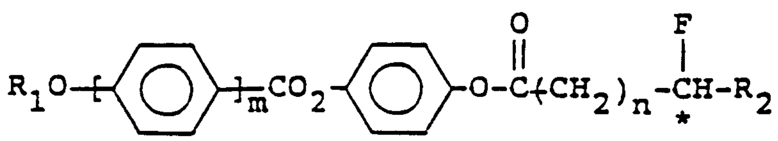

dans laquelle $R_1$ représente un groupe alkyle ayant de 6 à 12 atomes de carbone; $R_2$ représente un groupe alkyle ayant de 1 à 6 atomes de carbone; m vaut 1 ou 2; n vaut 2 ou 3; et * désigne un carbone asymétrique.

**5.** Composition de cristal liquide telle que revendiquée dans la revendication 1, dans laquelle ledit composé est représenté par la formule :

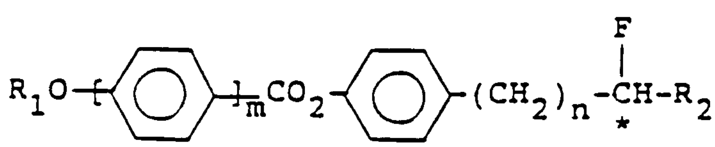

dans laquelle $R_1$ représente un groupe alkyle ayant de 6 à 12 atomes de carbone; $R_2$ représente un groupe alkyle ayant de 1 à 6 atomes de carbone; m vaut 1 ou 2; n est un nombre entier de 1 à 3; et * désigne un carbone asymétrique.

**6.** Composition de cristal liquide représentée par la formule :

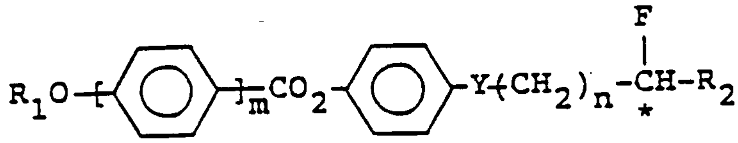 (I)

dans laquelle $R_1$ représente un groupe alkyle ayant de 6 à 12 atomes de carbone; $R_2$ représente un groupe alkyle ayant de 1 à 6 atomes de carbone; Y représente -O-,

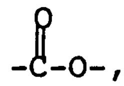 , 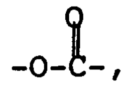 ,

ou une liaison unique; m vaut 1 ou 2; n vaut 2 ou 3 quand Y est -O- ou

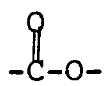 ,

ou n est un nombre entier de 1 à 3 quand Y est

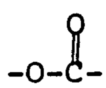

ou une liaison unique; et * désigne un atome de carbone asymétrique, et une espèce différente de composé d'un cristal liquide présentant une phase smectique C.

## Patentansprüche

**1.** Flüssigkristallverbindung der Formel (I):

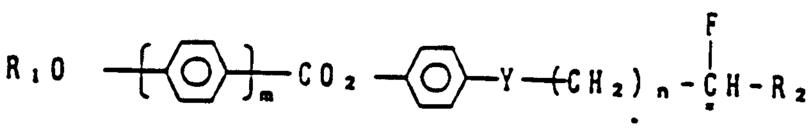 (I)

worin $R_1$ eine Alkylgruppe mit 6 bis 12 Kohlenstoffatomen bedeutet; $R_2$ eine Alkylgruppe mit 1 bis 6 Kohlenstoffatomen bedeutet; Y -O-,

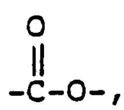 , 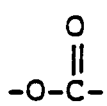 .

oder eine Einfachbindung bedeutet; m 1 oder 2 ist; n 2 oder 3 ist, wenn Y -O- oder

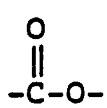

ist, oder n eine ganze Zahl von 1 bis 3 ist, wenn Y

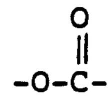

oder eine Einfachbindung ist; und * ein asymmetrisches Kohlenstoffatom bedeutet.

**2.** Flüssigkristallverbindung nach Anspruch 1, worin die Verbindung durch die Formel

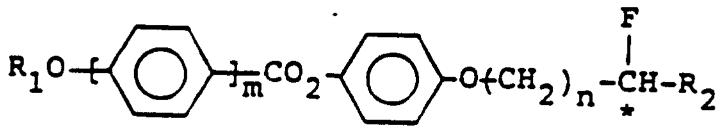

dargestellt wird, worin $R_1$ eine Alkylgruppe mit 6 bis 12 Kohlenstoffatomen bedeutet; $R_2$ eine Alkylgruppe mit 1 bis 6 Kohlenstoffatomen bedeutet; m 1 oder 2 ist; n 2 oder 3 ist; und * ein asymmetrisches Kohlenstoffatom bedeutet.

**3.** Flüssigkristallverbindung nach Anspruch 1, worin die Verbindung durch die Formel

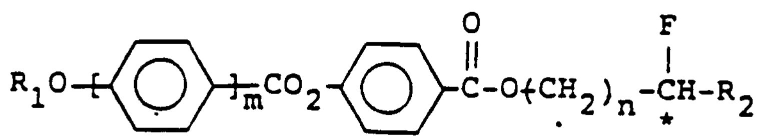

dargestellt wird, worin $R_1$ eine Alkylgruppe mit 6 bis 12 Kohlenstoffatomen bedeutet; $R_2$ eine Alkylgruppe mit 1 bis 6 Kohlenstoffatomen bedeutet; m 1 oder 2 ist; n 2 oder 3 ist; und * ein asymmetrisches Kohlenstoffatom bedeutet.

**4.** Flüssigkristallverbindung nach Anspruch 1, worin die Verbindung durch die Formel

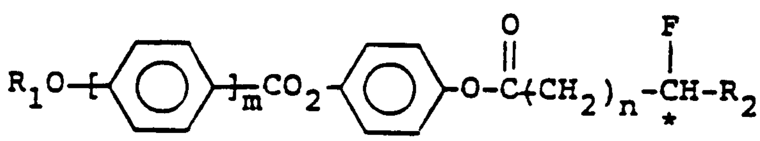

dargestellt wird, worin $R_1$ eine Alkylgruppe mit 6 bis 12 Kohlenstoffatomen bedeutet; $R_2$ eine Alkylgruppe mit 1 bis 6 Kohlenstoffatomen bedeutet; m 1 oder 2 ist; n eine ganze Zahl von 1 bis 3 ist; und * ein asymmetrisches Kohlenstoffatom bedeutet.

**5.** Flüssigkristallverbindung nach Anspruch 1, worin die Verbindung durch die Formel

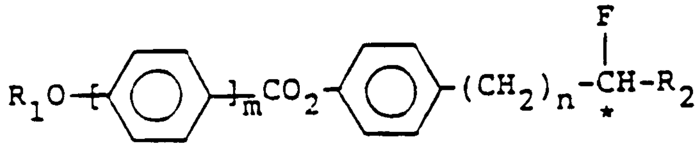

dargestellt wird, worin $R_1$ eine Alkylgruppe mit 6 bis 12 Kohlenstoffatomen bedeutet; $R_2$ eine Alkylgruppe mit 1 bis 6 Kohlenstoffatomen bedeutet; m 1 oder 2 ist; n eine ganze Zahl von 1 bis 3 ist; und * ein asymmetrisches Kohlenstoffatom bedeutet.

**6.** Flüssigkristallzusammensetzung, umfassend eine Flüssigkristallverbindung, dargestellt durch die For-

mel

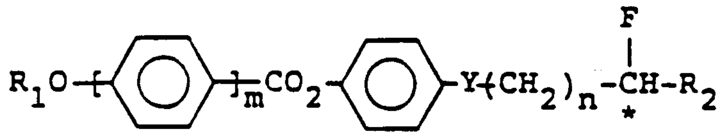 (I)

worin $R_1$ eine Alkylgruppe mit 6 bis 12 Kohlenstoffatomen bedeutet; $R_2$ eine Alkylgruppe mit 1 bis 6 Kohlenstoffatomen bedeutet: Y -O-,

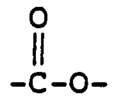, 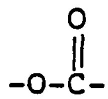

oder eine Einfachbindung bedeutet; m 1 oder 2 ist; n 2 oder 3 ist, wenn Y -O- oder

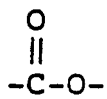

ist, oder n eine ganze Zahl von 1 bis 3, wenn Y

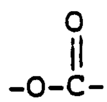

oder eine Einfachbindung ist; und * ein asymmetrisches Kohlenstoffatom bedeutet, und eine verschiedene Art einer Flüssigkristallverbindung, die eine Sc-Phase aufweist.